# EUROPÄISCHE PATENTANMELDUNG

(11) **EP 3 696 632 A1**
(43) Veröffentlichungstag der Anmeldung: **19.08.2020**
(21) Anmeldenummer: 19157411.0
(22) Anmeldetag: 15.02.2019
(51) Int. Cl.: G05B 19/404, G05B 19/4065

(54) **VERFAHREN ZUM BETRIEB EINER NUMERISCH GESTEUERTEN HERSTELLUNGSMASCHINE SOWIE EINE ENTSPRECHENDE NUMERISCHE STEUERUNG**

(71) Anmelder: Siemens Aktiengesellschaft, 80333 München (DE)
(72) Erfinder: Pitz, Thomas, 71277 Rutesheim (DE); Spielmann, Ralf, 70569 Stuttgart (DE)

(57) **Zusammenfassung**

Die Erfindung betrifft ein Verfahren zum Betrieb einer numerisch gesteuerten Herstellungsmaschine (2, 4) mit mindestens einer Komponente (12A, 12B), die bei der Herstellung eines Werkstücks (5) mechanischen und/oder elektrischen Beanspruchungen unterworfen ist. Die Beanspruchungen sind durch Werte messbarer physikalischer Größen beschrieben, wobei die Werte in einem Normalbetrieb innerhalb eines zulässigen Wertebereichs (LIMIT1) veränderbar sind. Der zulässige Wertebereich (LIMIT1) ist durch Aufbau und Konstruktion der Herstellungsmaschine bestimmt. Ausgelöst durch mindestens ein Steuersignal (30, 32, 34, 36) zur Herstellung des Werkstücks (5) wird ein Schonbetrieb zur Reduzierung der mechanischen und/oder elektrischen Belastungen aktiviert. In dem Schonbetrieb sind die Werte der messbaren physikalischen Größen innerhalb eines Teil-Wertebereichs (LIMIT2) veränderbar, wobei der Teil-Wertebereich (LIMIT2) gegenüber dem zulässigen Wertebereich (LIMIT1) eingeschränkt ist.

## Beschreibung

Die Erfindung betrifft ein Verfahren zum Betrieb einer numerisch gesteuerten Herstellungsmaschine mit mindestens einer Komponente, die bei der Herstellung eines Werkstücks mechanischen und/oder elektrischen Beanspruchungen unterworfen ist, die durch Werte messbarer physikalischer Größen beschrieben sind, wobei die Werte in einem Normalbetrieb innerhalb eines zulässigen Wertebereichs veränderbar sind und wobei der zulässige Wertebereich durch Aufbau und Konstruktion der Herstellungsmaschine bestimmt ist.

Die Erfindung betrifft ebenfalls eine numerische Steuerung für eine Herstellungsmaschine, die zur Durchführung des Verfahrens zum Betrieb angepasst ist.

Numerisch gesteuerte Herstellungsmaschinen, wie Werkzeugmaschinen oder Industrieroboter, werden für die Produktion von Werkstücken verwendet. Beim Einsatz von Herstellungsmaschinen ist es unter anderem relevant, in welcher Zeit ein Werkstück gefertigt wird. Je kürzer die Zeit für die Bearbeitung eines Werkstückes ist, desto effizienter ist der Fertigungs- oder Herstellungsprozess. Für die Verkürzung der Bearbeitungszeit gibt es Optimierungsverfahren.

Hersteller von Werkzeugmaschinen oder Industrierobotern konkurrieren untereinander mit den Schlagworten"" wie beispielsweise "Genauigkeit und Geschwindigkeit in der Produktion", wer die schnellste bzw. genaueste Maschine anbietet. Je genauer und/oder schneller eine Werkzeugmaschine oder ein Industrieroboter ein Werkstück fertigen kann, desto attraktiver ist diese Herstellungsmaschine für den Nutzer. Dementsprechend werden die bewegten Komponenten der Herstellungsmaschine - für die Kennzeichnung der Bewegung der Maschinenbauelemente im Raum ist der Begriff Maschinenachse gebräuchlich - für hohe mechanische Belastungen, insbesondere für dynamische Belastungen, konstruiert und ausgelegt. Dabei wird bis an die Grenzen der Materialbelastung gegangen, was die Lebenszeit oder zumindest die Häufigkeit der Wartungsintervalle massiv beeinflusst. Die Belastungsgrenzen ergeben sich aus den unterschiedlichsten Belastungsarten der Maschinenelemente. Bei einer Achsmechanik aus Stahl, wie beispielsweise bei einer Kugelrollspindel, verschleißen die Führungen und Rollen- bzw. Gleitschuhe bei schnellen und häufigen Bewegungsvorgängen rasch und müssen infolgedessen oft gewartet oder auch ausgetauscht werden. Auch elektrische Komponenten, die für immer schnellere und häufigere Bewegungsvorgänge (Brems- und Beschleunigungsvorgänge) ausgelegt werden und weiterhin auch immer so klein wie möglich (wegen Einkaufkosten, Abwärme und Platzbedarf, etc.) ausgelegt werden, kommen an ihre thermischen Grenzen. Zu den elektrischen Komponenten gehören beispielsweise Einspeisekomponenten, über die der Verbund der Antriebe der Herstellungsmaschine mit dem elektrischen Versorgungsnetz verbunden ist, und Motormodule, mit denen die Antriebsmotoren der Herstellungsmaschine gesteuert werden. Sie werden sogar an diesen Grenzen für längere Zeit betrieben.

Viele Produktionen können im Prinzip zu jedem beliebigen Zeitpunkt gestoppt und gestartet werden. Es gibt jedoch auch Produktionen, bei denen die Werkstückqualität und/oder der Bearbeitungsprozess oder Ähnliches darunter leiden würden, wenn die Produktion beliebig gestoppt oder gestartet wird. Dies hat meist mit dem Temperaturverhalten der Herstellungsmaschinen oder des Werkstücks zu tun. Ein konkretes Beispiel ist z.B. die Materialverformung durch Temperatur, wenn kein Kühlwasser mehr durch den Arbeitsraum einer vollautomatischen Fräsmaschine läuft, die elektrischen Komponenten der Achsen stromlos sind und durch die fehlende Bewegung keine Reibung mehr vorhanden ist. Das Metall verformt oder verzieht sich zwar nur geringfügig, beispielsweise um wenige Millimeter, jedoch ist damit die Geometrie bzw. die Genauigkeit der Achsen gestört bzw. massiv verändert. Die Bearbeitungsgenauigkeit entspricht durch diesen Verzug ggf. nicht mehr den Werkstückanforderungen. Eine Herstellungsmaschine kann oft die spezifizierte Bearbeitungsgenauigkeit nur dann einhalten, wenn sie im betriebswarmen Zustand ist, also wenn sie sich immer bewegt, wenn immer Kühlwasser durch den Arbeitsraum läuft, usw. Solch eine Werkzeugmaschine wird beim Start einer Produktion für ein paar Minuten oder ggf. bis zu mehreren Stunden hochgefahren, damit diese ihre Arbeitstemperatur und damit ihre Bearbeitungsgenauigkeit erreicht. Erst dann werden Werkstücke bearbeitet oder hergestellt. Oder was noch aufwändiger ist: es werden Werkstücke mit verringerter Genauigkeit gefertigt, bis die gewünschte Werkstückqualität und Werkstückgenauigkeit erreicht wird. Die mit verringerter Genauigkeit gefertigten Werkstücke werden dann entsorgt.

Auch bei bestimmten Fertigungstechnologien oder Bearbeitungsarten können ein beliebiger Produktionsbeginn, ein beliebiges Produktsende oder auch eine Produktionsunterbrechung unverträglich sein. Ein Beispiel dafür ist das Fräsen eines Zahnrads, wo mehrfach miteinander verkoppelte Maschinenachsen das Werkstück und das Werkzeug so ineinander bringen, dass es nicht möglich ist, diese Produktion zu stoppen. Das Werkzeug und das Werkstück würden zerstört werden. Ein weiteres Beispiel für eine gegen Unterbrechung unverträgliche Fertigungstechnologie ist eine Laser-Bearbeitung, bei der das Werkzeug ein Laserstrahl ist, der erst über einen längeren Zeitraum in einen bestimmten Betriebszustand gebracht werden muss, damit dieser bearbeiten kann. Die Herstellung von beispielsweise großen Flugzeugbauteilen mittels einer Tapelaying-Maschine oder Fiberplacement-Maschine mit temperierten Werkstoffen (Klebebänder, etc.) und temperierten Werkstücken bzw. Werkstückformen erlaubt ebenfalls keine beliebigen Änderungen im Ablauf des Fertigungsprozesses.

Aktuell gibt es bei Herstellungsmaschinen die Betriebszustände An oder Aus. Im An-Zustand werden die Herstellungsmaschinen bis zu den Grenzen der zulässigen Belastung von Mechanik und/oder Elektrik betrieben. Falls es der Herstellprozess oder die Produktion zulässt, werden sie in den Aus-Zustand versetzt, so dass keine Achsbewegungen mehr durchgeführt werden. Durch das Schonen der Maschine durch Stilllegung kann jedoch eine längere Anlaufphase notwendig sein, wie vorstehend beschrieben ist. Ein "langsamer fahren" scheidet oft bei bestimmten den Prozessen oder Technologien aus, da in typischen Bewegungsanweisen (NC-Teileprogramm, etc.) die Positionen und die Geschwindigkeiten der Bewegung vorgegeben werden. Die Geschwindigkeiten z.B. durch den Override-Schalter oder durch Änderungen am NC-Teileprogramm zu reduzieren, ist meist nicht zielführend, da bestimmte Prozesse auf Werkzeugmaschinen an die Bearbeitungsgeschwindigkeit gebunden sind. Es gibt beispielsweise eine bestimmte Schnittgeschwindigkeit für eine Materialpaarung (Werkstück-Werkstoff und Schneidwerkstoff), die zu realisieren ist. Wird die Schnittgeschwindigkeit nicht eingehalten, sind Fertigungsprobleme in Form von verschlechterter Oberflächenqualität oder erhöhtem Werkzeugverschleiß die Folge.

Der Erfindung liegt die Aufgabe zugrunde, ein Verfahren zum Betrieb einer numerisch gesteuerten Herstellungsmaschine anzugeben, mit dem bei gleichbleibender Herstellungsqualität die Intervalle zur Wartung und/oder zum Austausch von Maschinenkomponenten verlängert sind. Der Erfindung liegt ebenfalls die Aufgabe zugrunde, eine numerische Steuerung anzugeben, die zur Durchführung des Verfahrens ausgebildet ist.

Die erstgenannte Aufgabe wird durch ein Verfahren mit den Merkmalen des Anspruchs 1 gelöst. Danach ist das eingangs genannte Verfahren zum Betrieb einer numerisch gesteuerten Produktionsanlage dadurch gekennzeichnet, dass ausgelöst durch mindestens ein Steuersignal zur Herstellung des Werkstücks ein Schonbetrieb zur Reduzierung der mechanischen und/oder elektrischen Belastungen aktiviert wird und dass in dem Schonbetrieb die Werte der messbaren physikalischen Größen innerhalb eines Teil-Wertebereichs veränderbar sind, wobei der Teil-Wertebereich gegenüber dem zulässigen Wertebereich eingeschränkt ist.

Die maximal zulässige Beanspruchung wird vom Design und der Konstruktion, den zulässigen Verschleißgrenzen der mindestens einen Komponente und/oder deren thermische Belastung bestimmt. Die Reduktion dieser maximal zulässigen Beanspruchung in einem Schonbetrieb bedeutet somit eine verminderte mechanische und/oder thermische Belastung und damit einen verminderten Verschleiß. Der Schonbetrieb wird je nach Auslastung der Herstellungsmaschine in einem bestimmten Herstellprozess aktiviert. In dem Schonbetrieb wird die Herstellungsmaschine weiterbetrieben. Probleme durch Stillstand und erneutes Anfahren treten somit nicht auf. Insbesondere bleibt auch die Temperierung des Arbeitsraums weitgehend konstant und damit die Genauigkeit der Herstellung. Es sind keine Aufwärmphasen notwendig. Die bedarfsorientierte Vorgabe eines gegenüber dem zulässigen Wertebereich eingeschränkten Teil-Wertebereichs der die Beanspruchung kennzeichnenden physikalischen Größen kann, je nach Szenario, kunden- und anwendungsspezifische Probleme im Bereich Maschinenverschleiß lösen. Durch einen dauerhaften oder auch nur zeitweiligen Betrieb der Maschine im "Wohlfühlbereich" kann die Lebenszeit der Maschine verlängert werden.

Vorteilhafte Ausgestaltungen des Verfahrens sind durch die Merkmale der Ansprüche 2 bis 14 gegeben.

Eine vorteilhafte Ausgestaltung des erfindungsgemäßen Verfahrens ist durch die Merkmale des Anspruchs 3 gegeben. Danach arbeitet die mindestens eine Komponente im Schonbetrieb in einem Aussetzbetrieb. Die Aussetzdauer ist dadurch festgelegt, dass die Betriebstemperatur der mindestens einen Komponente einen bestimmten Wert nicht unterschreitet. Damit ist sichergestellt, dass temperaturbedingte geometrische Verformungen und/oder Veränderungen der Materialeigenschaften derart in zulässigen Grenzen bleiben, dass bei der Fortsetzung des Herstellprozesses keine erneute Anfahrphase notwendig ist. Beispielsweise kann vorgegeben werden, dass im Schonbetrieb eine Spindel einer Werkzeugmaschine im Aussetzbetrieb arbeitet. Es ist auch möglich, im Schonbetrieb den Herstellprozess von einzelnen Werkstücken im Ganzen als Aussetzbetrieb zu gestalten und zwischen der Herstellung von einzelnen Werkstücken eine Wartezeit einzufügen.

Eine weitere vorteilhafte Ausgestaltung ist durch die Merkmale des Anspruchs 4 gekennzeichnet. Danach umfassen die physikalischen Größen Bewegungsgrößen der mindestens einen Komponente. Zu den Bewegungsgrößen gehören Geschwindigkeit, Beschleunigung und Ruck, die die mindestens eine Komponente mechanisch belasten.

Eine weitere vorteilhafte Ausgestaltung des Verfahrens gemäß Anspruch 5 zeichnet sich dadurch aus, dass die Bewegung der mindestens einen Komponente mindestens entlang einer Achse erfolgt und dass die Bewegungsgrößen eine Achsbeschleunigung umfassen. Da die Achsbeschleunigung im Schonbetrieb nur noch in dem eingeschränkten Teil-Wertebereich veränderbar ist, ist so der Maximalwert der Beschleunigung entlang der Achse gegenüber der zulässigen spezifizierten Achsbeschleunigung reduziert. Achsen, deren Beschleunigung reduziert wurde, führen Geschwindigkeitsänderungen langsamer durch, dadurch entsteht weniger mechanische Belastung und somit Verschleiß in Elektrik und Mechanik. Damit wird die große Belastung der Achsmechanik und der Elektrik durch Beschleunigungs- und Bremsvorgänge verringert, so dass ein Schonen stattfindet.

Eine besonders vorteilhafte Ausgestaltung des erfindungsgemäßen Verfahrens gemäß Anspruch 6 zeichnet sich dadurch aus, dass die Herstellung des Werkstücks mindestens einen ersten Herstellschritt umfasst, bei dem die Komponente auf das Werkstück einwirkt, dass die Herstellung des Werkstücks mindestens einen zweiten Herstellschritt umfasst, bei dem die Komponente nicht auf das Werkstück einwirkt, dass in dem Schonbetrieb bei dem mindestens einen ersten Herstellschritt die Werte der physikalischen Größen der mindestens einen Komponente innerhalb des zulässigen Wertebereichs veränderbar sind und dass in dem Schonbetrieb bei dem mindesten einen zweiten Herstellschritt die Werte der physikalischen Größen der mindestens einen Komponente innerhalb des eingeschränkten Teil-Wertebereichs veränderbar sind.

Damit wird an der Technologie bzw. dem eigentlichen Bearbeitungs- oder Herstellprozess nichts verändert, da alle zu realisierenden Bearbeitungsgrößen, z.B. die Schnittgeschwindigkeit, gleich bleiben. Die Herstellqualität des Werkstücks ist so nicht beeinträchtigt, es wird lediglich die Zeit zwischen den einzelnen Bearbeitungs- oder Herstellschritten, also die für den mindestens einen zweiten Herstellschritt benötigte Zeit, verlängert. Im Fall einer Werkzeugmaschine werden damit beispielsweise maximalen Werte der Bewegungsgrößen nur dann reduziert, wenn das Bearbeitungsteil nicht auf das Werkstück einwirkt.

Eine weitere vorteilhafte Ausgestaltung des Verfahrens ist durch die Merkmale des Anspruchs 7 gegeben. Danach wird das mindestens eine Steuersignal durch eine manuelle Eingabe an einer Benutzerschnittstelle der numerisch gesteuerten Herstellungsmaschine vorgegeben. Beispielsweise teilt der Maschinenbediener der Steuerung mit, dass in der Nachtschicht nur mit 50% der maximalen Achsbeschleunigung in allen Achsen gefahren wird.

Eine vorteilhafte Ausgestaltung des Verfahrens ist durch die Merkmale des Anspruchs 9 gegeben. Danach wird das mindestens eine Steuersignal bei Überschreitung einer Grenztemperatur einer Komponente der Herstellungsmaschine ausgelöst. Für den Schonbetrieb kann so beispielsweise die Temperatur von Achsen, Motormodulen oder Einspeisungen für die Motormodule als Kriterium für eine Reduzierung der maximalen Werte der Beschleunigung der entsprechenden Achse verwendet werden.

Die zweitgenannte Aufgabe wird durch eine numerische Steuerung mit den Merkmalen des Anspruchs 15 gelöst. Danach ist die Herstellungsmaschine zur Durchführung des beanspruchten Verfahrens ausgebildet.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: den grundsätzlichen Aufbau einer Werkzeugmaschine mit einer Werkzeugmaschinensteuerung und
- FIG 2: ein Funktionsdiagramm der Steuerung zur Aktivierung eines Schonbetriebs.

Die nachfolgend beschriebenen Ausführungsbeispiele der Erfindung beziehen sich auf eine numerisch gesteuerte Herstellungsmaschine, die als numerisch gesteuerte Werkzeugmaschine ausgebildet ist. Mit entsprechenden, durch die Herstellungstechnologie bestimmten Anpassungen, die die grundsätzliche Wirkungsweise jedoch nicht berühren, gilt die Beschreibung auch für eine Ausbildung der Herstellungsmaschine als Fertigungsroboter. Gemeinsam ist diesen beiden Ausführungsformen der Herstellungsmaschine, dass bei einer Herstellung oder Bearbeitung eines Werkstücks numerisch gesteuerte relative Bewegungen zwischen einem Bearbeitungsteil der Herstellungsmaschine und einem Werkstück stattfinden.

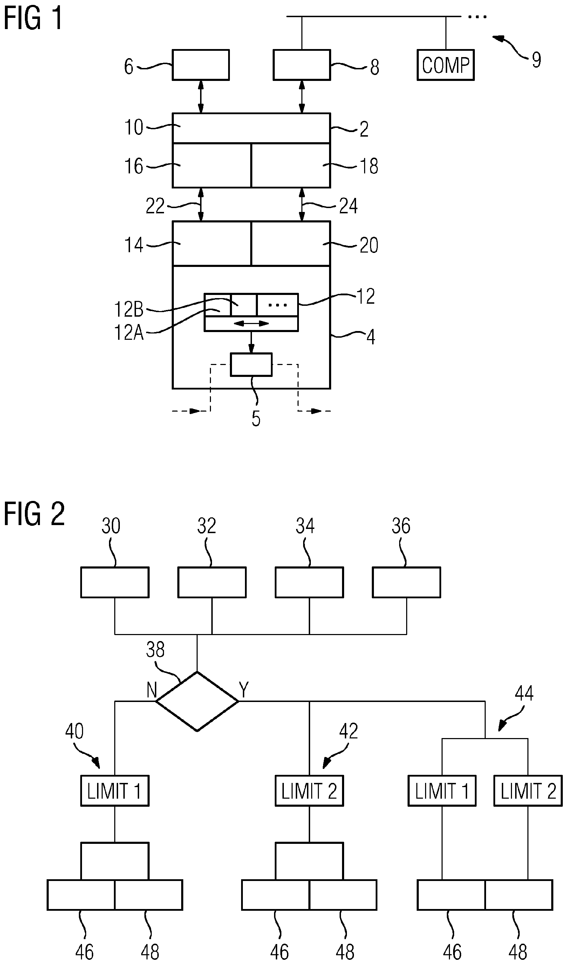

Die schematische Darstellung in FIG 1 zeigt eine numerische Werkzeugmaschinensteuerung 2, die mit einer Werkzeugmaschine 4 zur Herstellung oder auch Bearbeitung eines Werkstücks 5 zusammenwirkt. Die Werkzeugmaschine 4 zusammen mit der verbundenen und angepassten Werkzeugmaschinensteuerung 2 bildet eine numerisch gesteuerte Herstellungsmaschine. Der Zugang eines Anwenders oder Bedieners zu der Werkzeugmaschinensteuerungen 2 erfolgt über eine Ein-/Ausgabeeinheit 6, die auch als NC-Bedientafel bezeichnet wird. Zusätzlich ist noch eine Kommunikationsschnittstelle 8 vorgesehen, die eine Einbettung der numerisch gesteuerten Werkzeugmaschine 4 in ein Computernetzwerk 9 ermöglicht, diese Betriebsart wird im Englischen als Distributed Numerical Control (DNC) bezeichnet.

Die Werkzeugmaschinensteuerung 2 ist unterteilt in drei Hauptfunktionsbereiche. Ein erster Hauptfunktionsbereich, der COM-Teil 10, erfüllt Kommunikationsaufgaben mit einer angeschlossenen Peripherie, wie zum Beispiel mit der Kommunikationsschnittstelle 8 und weiteren Eingangs- und Ausgangsbaugruppen, Sensoren, Endschaltern und Ähnlichem. Des Weiteren dient der COM-Teil 10 der Kommunikation mit der Ein-/Ausgabeeinheit 6. Er stellt zudem eine Programmierungsumgebung zur Verfügung, welche mindestens einen Programmeditor, oft aber auch Simulations- und Testeinrichtungen umfasst.

Die wesentliche Aufgabe der Werkzeugmaschine 4 ist die Herstellung oder Fertigung und die Bearbeitung des Werkstücks 5, wobei Relativbewegungen zwischen einem Bearbeitungsteil 12 der Werkzeugmaschine 4 und dem Werkstück 5 stattfinden. Das Bearbeitungsteil 12 umfasst im Allgemeinen eine Vielzahl von Komponenten 12A, 12B usw., die unabhängig voneinander arbeiten oder die auch zusammenwirken. Zu den Komponenten 12A, 12B usw. gehören auch bewegliche Komponenten. Für die beweglichen Komponenten generiert die Werkzeugmaschinensteuerung 2 Sollwerte der auszuführenden Bewegungen entlang einer oder mehrerer Achsen oder Bewegungsachsen 14, die unter Einbeziehung der Antriebskomponenten in der Werkzeugmaschine 4 eine Oberflächengestalt oder Oberflächenform entsprechend den Fertigungsvorgaben realisieren. Die zweite Hauptfunktionalität der Werkzeugmaschinensteuerungen 2, also eine Wegesteuerung und Interpolation und damit die Erzeugung von Bewegungssollwerten für die einzelnen Bewegungsachsen 14 der Werkzeugmaschine 4, ist in einem NC-Kern 16 realisiert.

Schließlich wird die dritte Hauptfunktionalität der Werkzeugmaschinensteuerung 2 durch eine Anpasssteuerung 18 realisiert, die der Anpassung der allgemeinen, auf das Werkstück 5 bezogenen Bewegungssteuerung aus dem NC-Kern 16 an die konkrete Werkzeugmaschine 4 dient. Dazu gehören das Ansteuern von Aktoren, das Erfassen von Sensorsignalen, das Realisieren von Überwachungsfunktionen, das Gewährleisten von Sicherheitsfunktionen usw. über binäre Ein-/Ausgänge 20 der Werkzeugmaschine 4. Die Anpasssteuerung 18 wird mittels einer PLC (programmable logic controller), also mit einer speicherprogrammierbaren Steuerung, ausgeführt.

Die daten- oder signaltechnische Verbindung der Werkzeugmaschinensteuerung 2 mit der Werkzeugmaschine 4 erfolgt bezüglich der Bewegungssollwerte für die Achsen 14 der Werkzeugmaschine 4 über erste Steuerleitungen 22 und bezüglich der Aktoren und Sensoren in der Werkzeugmaschine 4 über zweite Steuerleitungen 24.

Die Werkzeugmaschine 4 ist für ihren speziellen Einsatzzweck, und für die verschiedenen Betriebszustände spezifiziert und entsprechend konstruiert und ausgelegt. Die Konstruktion und Auslegung der Komponenten der Werkzeugmaschine 4 wird besonders durch die zulässige mechanische und insbesondere durch die zulässige dynamische Belastung bestimmt. Dazu gehören die maximale Drehzahl einer Spindel, die maximale Achsgeschwindigkeit des linearen Vorschubs entlang der Achsen 14, die maximale Beschleunigung entlang der Achsen 14 und der maximale Ruck auf den Achsen 14. Diese Maximalwerte der Bewegungsgrößen gelten für einen Normalbetrieb der Werkzeugmaschine 4, also einen Einsatz und einen Betrieb der Werkzeugmaschine 4 entsprechend der Spezifikation. Die Werte der Bewegungsgrößen liegen in einem Normalbetrieb immer innerhalb eines zulässigen Wertebereichs LIMIT1, der durch die negativen und positiven zulässigen Maximalwerte begrenzt ist. Sie können für alle Achsen 14 gleich groß sein, sie können aber auch verschieden sein. Sie können zusätzlich von bestimmten Zuständen innerhalb und/oder außerhalb der Werkzeugmaschine 4 bestimmt sein, beispielsweise von der Umgebungstemperatur.

Die zulässigen Wertebereiche LIMIT1 gehören zur Maschinenspezifikation. Sie werden bei der Inbetriebnahme der numerischen Steuerung 2 zusammen mit der Werkzeugmaschine 4 der Steuerung 2 mitgeteilt, beispielsweise über Setup-Files des Werkzeugmaschinenherstellers und/oder über die zweiten Steuerleitungen 24. Zusätzlich können auch über Eingabemasken und Eingabedialoge weitere Möglichkeiten zur Vorgabe der zulässigen Wertebereiche LIMIT1 gegeben sein. Damit wird die numerische Steuerung 2 hinsichtlich der angeschlossenen Werkzeugmaschine 4 durch das Belegen der dafür vorgesehenen Systemvariablen bezüglich der Werkzeugmaschine 4 parametriert.

Die Werkzeugmaschine 4 kann zusätzlich zu dem oben beschriebenen Normalbetrieb mit den zulässigen Wertebereichen LIMIT1 in einem Schonbetrieb arbeiten. Im Schonbetrieb wird ein Teil-Wertebereich LIMIT2 aktiviert, der gegenüber dem zulässigen Wertebereich LIMIT1 eingeschränkt ist. Die Einschränkung kann mittels Reduzierungsfaktoren erfolgen, es können aber auch komplexere Reduzierungsalgorithmen oder Reduzierungstabellen oder Reduzierungskennlinien, die gegenseitige Abhängigkeiten der physikalischen Größen berücksichtigen, benutzt werden. Der Schonbetrieb kann im Prinzip für jede Bewegungsachse 14 der Werkzeugmaschine 4 individuell vorgegeben werden.

FIG 2 verdeutlicht die Aktivierung des Schonbetriebs. Beispielhaft sind vier verschiedene Möglichkeiten zur Vorgabe des Schonbetriebs dargestellt. Zunächst kann ein Maschinenbediener mittels einer manuellen Eingabe 30 über die Ein-/Ausgabeeinheit 6 vorgeben, dass die Werkzeugmaschine 4 in einem Schonbetrieb arbeiten soll. Die Vorgabe des Schonbetriebs kann alternativ mittels einer Zeitsteuerung 32 erfolgen. Beispielsweise soll die Werkzeugmaschine 4 am Tag im Normalbetrieb und in der Nacht im Schonbetrieb arbeiten. Ebenfalls ist es möglich, den Schonbetrieb über eine Fernsteuerung 34 vorzugeben. Beispielsweise kann ein Produktionsleiter bei verringerten Herstellungsaufträgen für einen bestimmten Zeitraum in dem Schonbetrieb eine verringerte Anzahl von Werkstücken 5 herstellen und dies der Werkzeugmaschine 4 über das Computernetzwerk 9 mitteilen. Ebenfalls ist es möglich, den Schonbetrieb über den Zustand von Komponenten in der Werkzeugmaschine 4 zu aktivieren. Über entsprechende Grenzwertmeldungen 36, beispielsweise eine Überschreitung der zulässigen Motor- oder Leistungselektroniktemperatur, schaltet die Steuerung 2 in den Schonbetrieb.

Ob die Werkzeugmaschine 4 im Normalbetrieb oder im Schonbetrieb arbeiten soll, hängt von einem entsprechenden Steuersignal an einer der möglichen Eingabestellen 30, 32, 34, 36 ab. Dies wird mit einer Programmverzweigung 38 verdeutlicht. Gibt es keine Anforderung, die Werkzeugmaschine 4 im Schonbetrieb zu betreiben, in FIG 2 der Ausgang "N" der Programmverzweigung 38, wird der zulässige Wertebereich LIMIT1 für alle physikalischen Stressgrößen übernommen. Die Werte der physikalischen Größen können jeden Wert innerhalb des zulässigen Wertebereichs LIMIT1 annehmen. Sie sind durch die Spezifikation der Werkzeugmaschine 4 bestimmt. Dieser Normalbetrieb soll durch einen ersten Zweig 40 verdeutlicht werden.

Gibt es eine Anforderung für einen Schonbetrieb, in FIG 2 der Ausgang "Y" der Programmverzweigung 38, wird zumindest für einen Herstellschritt der Teil-Wertebereich LIMIT2 übernommen. Damit werden die mechanischen und/oder elektrischen Belastungen in diesem Herstellschritt gegenüber dem Normalbetrieb verringert.

Bei einer ersten Ausführung des Schonbetriebs wird der Teil-Wertebereich LIMIT2 sowohl für einen ersten Herstellschritt 46, bei dem das Bearbeitungsteil 12 oder einer seiner Komponenten 12A, 12B, usw. auf das Werkstück 5 einwirkt, als auch für einen zweiten Herstellschritt 48 übernommen, bei denen das Bearbeitungsteil 12 oder einer seiner Komponenten nicht auf das Werkstück 5 einwirkt. Zu dem zweiten Herstellschritt 48 gehören Werkzeugwechsel und Bewegungen zwischen verschiedenen Bearbeitungen, die nicht kontinuierlich aufeinander folgen, beispielsweise das Bohren mehrerer gleicher Löcher hintereinander. Diese erste Ausführungsart des Schonbetriebs wird durch einen zweiten Zweig 42 verdeutlicht.

Abhängig von der Herstellungstechnologie und von Anforderung an die Herstellungsqualität kann der Schonbetrieb auch nur für den zweiten Herstellschritt 48 der Werkzeugmaschine 4 aktiviert werden, bei denen das Bearbeitungsteil 12 der Werkzeugmaschine 4 nicht auf das Werkstück 5 einwirkt, diese dritte Ausführungsart des Schonbetriebs wird durch einen dritten Zweig 44 verdeutlicht.

Ein großer Teil des mechanischen Stresses der bewegten Komponenten wird durch Beschleunigungs- und Bremsvorgänge verursacht. Bei einer einfachen und trotzdem sehr wirksamen Ausführungsart des Schonbetriebs werden die maximalen Werte der Beschleunigung, also die Grenzen des Teil-Wertebereichs LIMIT2 für alle Bewegungsachsen 14 beispielsweise auf die Hälfte der maximalen Werte im Normalbetrieb, also der Grenzen des zulässigen Wertebereichs LIMIT1 reduziert.

Eine Möglichkeit der Vorgabe der zweiten Maximalwerte kann mittels eines Befehls im Steuerprogramm realisiert werden mittels dessen der Maschinenführer zu einer Eingabe aufgefordert wird. Mit der Eingabeaufforderung wird dem Maschinenführer die Möglichkeit gegeben, den eingeschränkten Teil-Wertebereich LIMIT2 zu aktivieren. Damit sind dem Nutzer Zugriffsrechte zu Variablen, Parametern und zulässigen Wertebereichen gegeben, die bei der Initialisierung der Steuerung zusammen mit der Herstellungsmaschine als zulässiger Wertebereich LIMIT1 von der Herstellungsmaschine vorgegeben sind.

Eine oder auch mehrere Ausführungsarten des Schonbetriebs können als ein Schonbetriebsmodul in der Werkzeugmaschinensteuerung 2 abgespeichert sein, ähnlich wie bei der Parametrierung bei der Inbetriebnahme der Werkzeugmaschinensteuerung 2. Das Schonbetriebsmodul kann derart ausgestaltet sein, dass die Teil-Wertebereiche LIMIT2 von einem Maschinenführer interaktiv an der Ein-/Ausgabeeinheit 6 vorgegeben oder geändert werden können.

## Patentansprüche

1. Verfahren zum Betrieb einer numerisch gesteuerten Herstellungsmaschine (2, 4) mit mindestens einer Komponente (12A, 12B), die bei der Herstellung eines Werkstücks (5) mechanischen und/oder elektrischen Beanspruchungen unterworfen ist, die durch Werte messbarer physikalischer Größen beschrieben sind, wobei die Werte in einem Normalbetrieb innerhalb eines zulässigen Wertebereichs (LIMIT1) veränderbar sind und wobei der zulässige Wertebereich (LIMIT1) durch Aufbau und Konstruktion der Herstellungsmaschine bestimmt ist, **dadurch gekennzeichnet, dass** ausgelöst durch mindestens ein Steuersignal (30, 32, 34, 36) zur Herstellung des Werkstücks (5) ein Schonbetrieb zur Reduzierung der mechanischen und/oder elektrischen Belastungen aktiviert wird und dass in dem Schonbetrieb die Werte der messbaren physikalischen Größen innerhalb eines Teil-Wertebereichs (LIMIT2) veränderbar sind, wobei der Teil-Wertebereich (LIMIT2) gegenüber dem zulässigen Wertebereich (LIMIT1) eingeschränkt ist.

2. Verfahren nach Anspruch 1, **dadurch gekennzeichnet, dass** die messbaren physikalischen Größen die Temperatur der mindestens einen Komponente (12A, 12B) umfassen.

3. Verfahren nach Anspruch 1 oder 2, **dadurch gekennzeichnet, dass** die mindestens eine Komponente (12A, 12B) im Schonbetrieb in einem Aussetzbetrieb arbeitet.

4. Verfahren nach einem der vorstehenden Ansprüche, **dadurch gekennzeichnet, dass** die messbaren physikalischen Größen Bewegungsgrößen der mindestens einen Komponente (12A, 12B) umfassen.

5. Verfahren nach Anspruch 4, **dadurch gekennzeichnet, dass** die Bewegung der mindestens einen Komponente (12A, 12B) mindestens entlang einer Achse (14) erfolgt und dass die Bewegungsgrößen eine Achsbeschleunigung umfassen.

6. Verfahren nach einem der vorstehenden Ansprüche, **dadurch gekennzeichnet , dass** die Herstellung des Werkstücks mindestens einen ersten Herstellschritt (46) umfasst, bei dem die mindestens eine Komponente (12A, 12B) auf das Werkstück (5) einwirkt, dass die Herstellung des Werkstücks (5) mindestens einen zweiten Herstellschritt (48) umfasst, bei dem die mindestens eine Komponente (12A, 12B) nicht auf das Werkstück (5) einwirkt, dass in dem Schonbetrieb bei dem mindestens einen ersten Herstellschritt (46) die Werte der physikalischen Größen der mindestens einen Komponente (12A, 12B) innerhalb des zulässigen Wertebereichs (LIMIT1) veränderbar sind und dass in dem Schonbetrieb bei dem mindesten einen zweiten Herstellschritt (48) die Werte der physikalischen Größen der mindestens einen Komponente (12A, 12B) innerhalb des eingeschränkten Teil-Wertebereichs (LIMIT2) veränderbar sind.

7. Verfahren nach einem der vorstehenden Ansprüche, **dadurch gekennzeichnet , dass** das mindestens eine Steuersignal durch eine manuelle Eingabe (30) an einer Ein-/Ausgabeeinheit (6) der numerisch gesteuerten Herstellungsmaschine (2, 4) vorgegeben wird.

8. Verfahren nach einem der vorstehenden Ansprüche, **dadurch gekennzeichnet, dass** das mindestens eine Steuersignal von einem Zustand der mindestens einen Komponente (12A, 12B) der Herstellungsmaschine (4) ausgelöst wird.

9. Verfahren nach Anspruch 5, **dadurch gekennzeichnet, dass** das mindestens eine Steuersignal bei Überschreitung einer Grenztemperatur der mindestens einen Komponente (12A, 12B) der Herstellungsmaschine (4) ausgelöst wird.

10. Verfahren nach einem der vorstehenden Ansprüche, **dadurch gekennzeichnet, dass** das mindestens eine Steuersignal ferngesteuert (34) ausgelöst wird.

11. Verfahren nach einem der vorstehenden Ansprüche, **dadurch gekennzeichnet, dass** das mindestens eine Steuersignal zeitgesteuert (32) ausgelöst wird.

12. Verfahren nach einem der vorstehenden Ansprüche, **dadurch gekennzeichnet, dass** die Herstellungsmaschine (2, 4) in ein Computernetzwerk (9) eingebettet ist und dass das mindestens eine Steuersignal von einem mit dem Computernetzwerk (9) verbundenen Steuerrechner vorgegeben wird.

13. Verfahren nach einem der Ansprüche 1 bis 12, **dadurch gekennzeichnet, dass** die Herstellungsmaschine (2, 4) als Werkzeugmaschine ausgebildet ist.

14. Verfahren nach einem der Ansprüche 1 bis 12, **dadurch gekennzeichnet, dass** die Herstellungsmaschine (2, 4) als Fertigungsroboter ausgebildet ist.

15. Numerische Steuerung für eine Herstellungsmaschine (2, 4), die zur Durchführung des Verfahrens nach einem der vorstehenden Ansprüche ausgebildet ist.
